(19) Europäisches Patentamt
European Patent Office
Office européen des brevets

(11) Publication number: **0 476 222 A1**

(12) **EUROPEAN PATENT APPLICATION**

(21) Application number: **91105243.9**

(22) Date of filing: **03.04.91**

(51) Int. Cl.5: **C08F 216/18**, C08J 3/16, //(C08F216/18,222:06)

(30) Priority: **20.09.90 JP 250913/90**
**08.02.91 JP 104026/91**

(43) Date of publication of application:
**25.03.92 Bulletin 92/13**

(84) Designated Contracting States:
**CH DE FR GB IT LI NL**

(71) Applicant: **DAICEL CHEMICAL INDUSTRIES, LTD.**
**1, Teppo-cho**
**Sakai-shi Osaka(JP)**

(72) Inventor: **Ogawa, Hiroshi**
**8-5, Kuba 6-chome**
**Otake, Hiroshima(JP)**
Inventor: **Ogawa, Yoshimi**
**13-5, Kuba 4-chome**
**Otake, Hiroshima(JP)**

(74) Representative: **Brauns, Hans-Adolf, Dr. rer. nat. et al**
**Hoffmann, Eitle & Partner, Patentanwälte**
**Arabellastrasse 4**
**W-8000 München 81(DE)**

# (54) Granulated methyl vinyl ether/maleic anhydride copolymer and process for the preparation thereof.

(57) Disclosed are a granulated methyl vinyl ether/maleic anhydride copolymer and a process for the preparation thereof.

The granulated methyl vinyl ether/maleic anhydride copolymer according to the present invention has a property of being capable of easy handling in the manufacturing process thereof, packing processes and or dissolving processes thereof, etc., and non-dusting, and furthermore does not substantially containing any inorganic materials.

The granulated methyl vinyl ether/maleic anhydride copolymer can be prepared by a dryer having an inverted conically shaped-vessel.

The vessel has a screw body adjacent to its sloped internal wall.

The screw body revolves on its own shaft revolving by planetary motion along the sloped internal wall of the vessel.

EP 0 476 222 A1

## FIELD OF THE INVENTION

The present invention relates to a methyl vinyl ether/maleic anhydride copolymer having a specific distribution range of particle size which does not substantially contain any inorganic materials, and a process for the preparation thereof.

In particular, the present invention relates to a methyl vinyl ether/maleic anhydride copolymer having a property of being capable of easy handling in the manufacturing processes thereof, in packing processes and or in dissolving processes thereof, etc., and a property of being non-dusting.

## BACKGROUND OF THE INVENTION

A methyl vinyl ether/maleic anhydride copolymer is a copolymer-anhydride having a linear molecular structure and a water-soluble high molecular weight electrolyte copolymer compound which has been used as, for example, surface active compounds, a component of glass cleaners, a component of additives to builders for a detergent, and as sequestering agents themselves.

Recently, the methyl vinyl ether/maleic anhydride copolymer has been used as a component of water-soluble additives to agents to be coated on a sticking plaster (e.g., under the name "Pappu-zai" in Japan) by mixing with endermic liniments and glues because of having an excellent non-toxic property with respect to the human body, an excellent chemical stability for a long period of time, an excellent stickiness, an aggregating ability, a water absorbing ability, restrippability, etc.

Furthermore, copolymers in which maleic anhydride units are partially or completely ring-opened with water, alkalis, various alcohols, are also widely applied as a thickening additive for water soluble materials, a component of additives to adhesives, an anti-sticking additive to detergents, a component of additives to spray-type fixing agents for human hairs.

Hitherto, it is well known that a methyl vinyl ether/maleic anhydride copolymer has been produced by a free radical copolymerization of methyl vinyl ether monomer with maleic anhydride monomer in the presence of a free radical catalyst and the absence of molecular oxygen at a temperature of from 40° to 120° C in organic solvents in which it is insoluble, such as benzene in a closed autoclave reactor, etc., as described in U.S. Patent 2,782,182 and Japanese Examined Patent Publication (Kokoku) No. 29193/1970, etc.

The copolymerized product is removed from the autoclave reactor in the form of slurry, and the solvent is removed from the slurry to obtain a powdered copolymer.

On the other hand, as described in Japanese Unexamined Patent Publication (Kokai) No. 158214/1982, maleic anhydride is dissolved in an excess amount of methyl vinyl ether without any other solvents, followed by vigorously stirring in a powdered bed to copolymerize, followed by a distillation removal of the excess amount of methyl vinyl ether monomer to obtain a copolymer containing small-sized granules and a small amount of large-sized granules, classified as a powder-state copolymer.

Furthermore, Japanese Unexamined Patent Publication (Kokai) No.14222/1989 discloses that a polymerization carried out by using methyl vinyl ether as a solvent under pressurized conditions to produce a powder-state copolymer.

However, the powder-state copolymer, particularly containing very small-sized powder, has a disadvantage of forming dust in the atmosphere when being supplied into a reactor or dissolver therefor in the case of using for the above described applications.

The scattered powders make surroundings of the reactors, etc., dirty, and also workers breathing the scattered powders may suffer damage to their in tracheas and/or lungs.

Still further, the powder-state copolymer containing the considerably small-sized powder has a disadvantage of floating on the liquid surface in the case of preparing alcohol solution or water solution, resulting in forming a state such as an undissolved lump of flour, and a long period of time is required to dissolve such completely.

Also, it is possible that the scattered powders may catch fire by a spark discharge brought about by static electricity or a spark by mechanical shock, etc., resulting in a dust explosion and severe accidents.

For the purpose of solving the above-described disadvantages, for example, U.S. Patent 4,370,454 [entitled "A Process For Preparing A Maleic Anhydride Polymer", and corresponding to Japanese Unexamined Patent Publication (Kokai) No. 158214/1982] discloses that a copolymerization of maleic anhydride dissolved in an excess amount of methyl vinyl ether with methyl vinyl ether is carried out without solvents by vigorous rotation in a powdered materials bed.

After completion of the polymerization, the unreacted excess amount of vinyl methyl ether is removed by distillation to prepare a copolymer having a particle size range of from 10 microns to 2 cm.

The specific powdered materials are, for example, powdered quartz, powdered aluminum oxide, etc.

However, the obtained copolymer inevitably, even though in a small amount, contains powdered inorganic materials because of the above described polymerization method in which the powdered materials are used.

Accordingly, the final product has a problem of being mixed with the powdered inorganic materials. Also, it requires a complicated process control.

Under this background, and as a result of the extensive investigations, the present inventors have now completed the present invention.

## SUMMARY OF THE INVENTION

It is a primary object of the present invention to provide a methylvinyl-ether/maleic anhydride copolymer containing large-sized granules and not substantially containing any inorganic materials, and thereby having a capability of being easily completely dissolved in water without forming a state such as an undissolved lumps of flour and an anti-scattering (non-dusting) property in atmosphere during packing and handling process, etc.

In one aspect, then, the present invention is directed to a granulated methyl vinyl ether/maleic anhydride copolymer containing maximum particle size granules of larger than 600 microns, said granules having a particle size distribution of more than 20 % by weight based on the total weight, and not substantially containing any inorganic materials.

In another aspect, the present invention is directed to a process for the preparation of a granulated methyl vinyl ether/maleic anhydride copolymer containing maximum particle size granules of larger than 600 microns, said granules having a particle size distribution of more than 20 % by weight based on the total weight, and not substantially containing any inorganic materials, which comprises the step of:

(a) introducing a solvent-containing slurry state methyl vinyl ether/maleic anhydride copolymer from the upper parts of a vessel which has an inverted conically shaped-structure, said vessel having a screw body adjacent to its sloped internal wall, said screw body revolving on its own shaft, said screw body revolving by planetary motion along the sloped internal wall;

(b) heating said slurry state methyl vinyl ether/maleic anhydride copolymer; and

(c) discharging a solvent-free methyl vinyl ether/maleic anhydride copolymer from the lower part of said vessel.

## BRIEF DESCRIPTION OF THE DRAWING

Figure 1 is a block-diagram illustrating the process according to the present invention. In Figure 1, 3-4 is an inverted conically shaped-vessel in a dryer. 3-7 is a shaft for revolving a screw body by planetary motion along the sloped internal wall of the vessel. 3-5 is a screw body having a shaft for revolving itself.

Figures 2 to 8 are histograms illustrating a particle size distribution of a granule containing vinyl methyl ether/maleic anhydride copolymer obtained in examples and comparative examples. In Figures 2-8, the abscissa represents each particle size value, and the ordinate represents the content of each particle size group by weight %.

## DETAILED DESCRIPTION OF THE INVENTION

The present invention is now described hereinafter in more detail. The reaction for preparing a methyl vinyl ether/maleic anhydride copolymer may be represented by the equation:

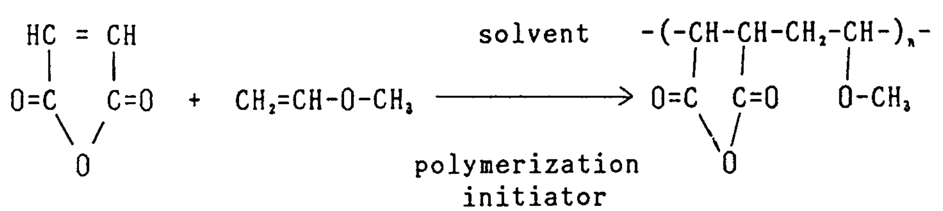


wherein n is from 10 to 100,000, and can be adjusted by controlling a charged amount of initiating agents for the polymerization reaction, the charging speed of methyl vinyl ether monomer, polymerization

temperatures, and/or the charging speed of a chain transfer initiator.

The present methyl vinyl ether/maleic anhydride copolymer containing large-sized granules and a manufacturing process therefor are described hereinafter according to the Figure 1, that is, a block-diagram, in which the equipment used to carry out the process is illustrated.

Figure 1 is a block-diagram illustrating a process according to the present invention. Therein, 1-1 is a reactor for carrying out the polymerization reaction into which starting materials are charged. 2-2 is a centrifugal separator. 3-4 is an inverted conically shaped-vessel in a dryer, and 3-7 is a shaft for revolving a screw body by planetary motion along the sloped internal wall of the vessel. The shaft 3-6 can also be inserted through shaft 3-7 at the upper part of the vessel 3-4.

In the case that the shaft 3-6 is inserted through the shaft 3-7, bevel gears are preferably used in offset connection parts. Lastly, 3-6 is an shaft for revolution connected to the screw body through a universal joint or bevel gears.

Methyl vinyl ether and maleic anhydride, which are starting material monomers, are charged into the reactor 1-1 with a conventional solvent such as benzene, which is a dispersion solvent for the resulting methyl vinyl ether/maleic anhydride copolymer, followed by being radically copolymerized in the presence of an initiating agent for radical polymerization.

After completion of the radical polymerization, the resulting copolymer is discharged out of the reactor 1-1 in the form of a slurry-state. The discharged slurry-state copolymer containing a solvent such as benzene is charged into the centrifugal separator 2-2 to remove the greater parts of the solvent, such that the copolymer in the form of a cake-state is obtained.

The cake-state copolymer still contains from approximately 70 % to 80 % by weight solvent (such as benzene), based on the total weight of the cake-state copolymer.

Successively, the copolymer in the cake-state form is transferred to a dryer which has a characteristic structure described hereinafter.

In the dryer, the copolymer is heated while agitating and under vacuum to remove the residual solvent and to obtain a dried copolymer having a specific distribution range of the particle sizes.

It is a characteristic of the present invention that a solvent containing slurry-state copolymer is dried and granulated in a dryer having an inverted conically shaped vessel 3-4.

The inverted conically shaped vessel 3-4 has a screw body 3-5 along its sloped internal wall, wherein the screw body 3-5 revolves on its own shaft 3-6 which is connected to the lower part of the screw body at the bottom of the vessel through a universal joint, or which is inserted through the shaft 3-7 at the upper of the vessel, the screw body also revolves by planetary motion along the sloped internal wall revolving on its own shaft 3-6.

It appears that the granule having moderate particle sizes distribution can be formed during drying under the above-described combined motions.

The revolving direction of the screw body in the planetary motion is not limited. However, the revolving direction of the screw body on its own shaft should be maintained in a direction by which a mixture composed of the slurry-state copolymer and the partially granulated copolymer including powder-state copolymer is transferred in an upward direction in the vessel along the sloped internal wall.

That is, there is required a combination of distortion direction of the screw blade and revolving direction.

The copolymer in the form of cake-state which is contained in the conically-shaped vessel is agitated and crushed by the planetary motion of the screw body.

The crushed powder-state copolymer containing solvent is dried by heat supplied to the vessel equipped with a muffle outside.

Effects according to revolving in planetary motion and an effect according to revolving on its own shaft of the screw body can not be completely distinguished.

The whole part of the cake-state copolymer is agitated by revolving the screw body in a planetary motion resulting in a struggling motion of the copolymer being caused in the vessel.

Thereby, the copolymer is crushed and transferred to the upper part of the vessel from the bottom part by revolving on its own shaft of the screw body.

It is generally known that a powder/granule mixture composed of an identical material is separated based on the apparent density thereof by a struggling motion, that is, large granules (i.e., having a low apparent density) tends to automatically move in an upward direction in a vessel, while small granules or powder (i.e., having a high apparent density) tend to automatically move in a downward direction in the vessel through the clearance between the large-sized granules.

The dryer to be used in the present invention is characterized in that the above-described tendency is caused in the vessel, and further a combination of revolving in a planetary motion with revolving on its own shaft of the screw body enables preparation of a uniformly granulated copolymer having a fixed particle size

range.

That is, the copolymer including relatively large-sized granules which tend to be transferred to the upper part of the inverted conically-shaped vessel, is transferred to the lower part of the vessel being crushed into moderate sizes by the screw body revolving on its own shaft to prepare the uniformly granulated copolymer having a specific particle size range.

A mutual relationship of the dimensions between the inverted conically-shaped vessel and the dimensions of the screw body is not specified strictly, whereas the length of the screw body is preferably more than from 1/2 to 1/1 of the height of the sloped internal wall of the vessel, and more preferably is from 3/4 to 4/5.

Where the length is not more than 1/2, the volume content of the copolymer is small, and results in lower productivity.

Although a relationship between the sloped internal wall of the inverted conically-shaped vessel and the position of the sloped screw body is not specified strictly, the lowest part of the screw body is preferably nearly situated at the lowest part of the vessel so that as small quantity as possible of finely powder-state copolymer mixes in the product.

The highest part of the screw body is unlimitedly situated, in consideration of an agitating effect and a crushing effect, that is, the speed of the planetary motion of the screw body, the utilization efficiency of the vessel, that is, holding capacity of the vessel in which the wet copolymer is contained.

Although the sloped degree of the internal wall of the vessel is not limited, the conically-shaped top which is situated in the bottom of the vessel has, preferably, an angle of from 15° to 75°, and more preferably from 30° to 45°.

The diameter of the screw body affects the capacity of transferring the copolymer toward the upper part of the vessel as well as the revolutioning speed on its own shaft and the distortion degree of the screw blade.

Accordingly, the diameter of the screw body should be selected in consideration of them.

Preferable materials for the equipment include conventional stainless steels, which have a tendency of not being eroded.

With respect to drying the polymer in the vessel, gases such as air or nitrogen gas for drying are optionally supplied from a supplying tube, which is equipped at the bottom part of the dryer, into the vessel, in order to obtain a copolymer having more precisely granulated particle size ranges.

Also, the reactor 1-1 is preferably equipped with an agitator and a muffle, in which a heat transfer medium is circulated, and a mechanism for circulating the medium to remove heat of the reaction and to control the reaction temperatures.

Furthermore, the reactor 1-1 is optionally equipped with a regulator, in which organic components such as evaporated unreacted monomer(methyl vinyl ether) and/or solvents can be recovered by cooling.

The reaction is carried out by a sedimentation polymerization.

Preferable solvents to be used in the sedimentation polymerization are soluble with the monomers, and insoluble with the methyl vinyl ether/maleic anhydride copolymer, and furthermore are inert.

The specific solvents include an aromatic hydrocarbon solvent such as benzene, toluene or xylene, etc., a halogenated hydrocarbon solvent such as chloroform, methylene chloride, etc., or an azeotropic mixture thereof, etc.

Benzene is a most preferable solvent, with which a high molecular weight copolymer can be readily obtained and the degree of polymerization can be readily controlled.

The polymerization reaction is preferably carried out in the range of from 5 to 30 % by weight of the concentration of the copolymer, and more preferably from 10 to 30 % by weight.

Where the concentration is less than 5 % by weight, solvent volume is too large to economically recover and refine the solvents.

Furthermore, the great volume of the solvent would inevitably require a large scale plant, which is not reasonable from the viewpoint of plant economy.

On the other hand, where the concentration is more than 30 % by weight, the produced copolymer has a tendency of adhering to the internal wall of the reactor so that it is difficult to remove from the reactor.

On carrying out the sedimentation copolymerization in the above described higher concentration of the solvent, various anti-adhering agents can be preferably used, such as those disclosed in the US Patent 3,532,771. Various radical polymerization initiators such as organic peroxides can be used.

Specific initiators include lauryl peroxide, benzoyl peroxide, perbutyl oxide, azobis-isobutyl nitryl, t-butyl cyclohexyl peroxydicarbonate, etc.

The initiators can be supplied by a lump addition at the start of the polymerization reaction or by supplying such continuously or intermittently during the polymerization reaction.

The initiators is widely used in the amount of not more than 5 % by weight based on the total starting materials depending upon the kinds of the initiator or the schemed molecular weight of the methyl vinyl ether/maleic anhydride copolymer.

Where the amount used is more than 5 % by weight, the radical polymerization initiators may remain in the copolymer, resulting in lower purity of the copolymer.

Maleic anhydride which is one of the starting monomers in the preparation of the copolymer, is preferably charged into the reactor and dissolved with a solvent such as benzene before initiating the polymerization.

Successively, methyl vinyl ether which is another starting monomer, is preferably supplied continuously or intermittently during the polymerization. The slurry concentration of the copolymer in the completion of the copolymerization depends upon the charged amounts of maleic anhydride and the solvent.

Accordingly, the amount of maleic anhydride to be charged is preferably maintained in the range of from 3 % to 32 % based on the total amount of the starting materials.

Methyl vinyl ether is not necessarily supplied continuously or intermittently during the polymerization, its fixed amount can also be charged in the lump with equivalent amount of maleic anhydride before initiating the copolymerization, as described in the Japanese Examined Patent Publication(Kokoku) No.29193/1970.

In the case that methyl vinyl ether is supplied into the reactor continuously or intermittently during the polymerization reaction, methyl vinyl ether is partially evaporated and lost from the liquid surface. Accordingly, from one time to double the molar amount based on the theoretical amount of methyl vinyl ether should preferably be supplied; more preferably, from one time to triple the molar amount is supplied.

Supplying methyl vinyl ether in more than triple the molar amount is not preferable, because of a great deal of loss.

Optimum temperatures for copolymerizing the ethyl vinyl ether/maleic anhydride copolymer are preferably from 20° to 100° C, and more preferably from 40° to 80° C, depending upon kinds of the radical polymerization initiator and the solvents.

The produced copolymer, which is not dissolved in the non-polar solvents described hereinabove, is gradually separated as a solid with the progress of the polymerization reaction.

The produced copolymer removed from the reactor in the form of slurry-state mixture composed of the copolymer and the solvent.

The slurry-state mixture is supplied into a centrifugal separator to partially remove the solvent, followed by being transferred to a drying process.

The obtained copolymer after centrifugally separating still contains from 30 % to 75 % by weight solvent, that is, the copolymer is wetted by the solvent.

However, the wet copolymer does not have a tendency of fluidizing.

Drying of the wet copolymer is preferably carried out under heating and reduced pressure to completely remove the residual solvent in the wet copolymer.

In the case of using benzene, allowable content of the residual solvent in the dried copolymer is 1 % by weight at the most in the cases described hereinabove.

On drying the wet copolymer, the granulated and dried copolymer can be obtained by controlling the drying conditions.

For example, the present granulated dried copolymer, which has a specific particle size distribution, can be obtained by drying the wet copolymer with a dryer equipped with a vessel which has an inverted conically shaped-structure, the vessel having a screw body along with its sloped internal wall, the screw body revolving on its own shaft, the screw body revolving by planetary motion along the sloped internal wall, under reduced pressure.

The phrase "granulated methyl vinyl ether/maleic anhydride copolymer" in the present invention will be described hereinafter in detail.

That is, the phrase "granulated methyl vinyl ether/maleic anhydride copolymer" in the present invention means that the copolymer contains maximum particle size granules larger than 600 microns and the granules having a particle size distribution of more than 20 % by weight based on the total weight, whereas the prior copolymer is classified in a category of, as it were, fine powder having small amount of granules.

It is noted that the prior methyl vinyl ether/maleic anhydride copolymers not substantially containing any inorganic materials have a maximum particle size range of from approximately 200 to 600 microns at the largest.

The content of large size particles larger than 600 microns, for example, 1,000 microns particles are not absolutely zero, the content is less than 0.5 % by weight based on the total weight.

Furthermore, it is noted that the phrase "not substantially containing any inorganic materials" in the

present invention means that the copolymer does not contain any inorganic materials other than very minor amounts of impurities derived from starting materials or solvents, and/or from parts of the equipment.

As described hereinabove, although a methyl vinyl ether/maleic anhydride copolymer having a particle size range of from 10 microns to 2 cm is disclosed in U.S. Patent 4,370,454, the copolymer inevitably contains an inorganic material such as a powdered quartz or powdered aluminum oxide, etc., as well as very minor amount of impurities derived from starting materials or solvents, and/or parts of the equipment.

Furthermore, said U.S. Patent does not describe a particle size distribution range.

It is noted that the maximum particle size of the present granulated copolymer is larger than 4,000 microns in spite of depending upon drying conditions such as revolutions and temperatures or supplying velocity of gases for ventilation in the vessel.

However, the content of particle size of larger than 4,000 microns is a very small amount.

Furthermore, it is noted that particle size of the granulated copolymer is measured based on a standard sieve(netted sieve) according to Japanese Industrial Standard Z 8801.

The particle size distribution range is determined by weight percent of the granulated copolymer remaining over each sieve.

The present invention is illustrated below by examples and comparative examples.

<u>EXAMPLE 1</u>

Preparation of a methyl vinyl ether/maleic anhydride copolymer wetted by benzene:

A reactor having a capacity of 200 L equipped with a cooler for regulating and an internal temperature control unit was charged with 12.56 kg of maleic anhydride and 180 kg of benzene to dissolve it.

Successively, the internal temperature of the reactor was maintained at a temperature of 80° C, followed by being charged with 22.5L of methyl vinyl ether from the bottom part of the reactor and 10 L of benzene containing 18 g of lauryl peroxide for 4.5 hours to copolymerize.

After completion of the copolymerization reaction, the internal materials of the reactor were cooled to obtain a slurry-state copolymer having a solid content of 10 % by weight.

The slurry-state copolymer was supplied to a centrifugal separator to partially remove benzene and to obtain the copolymer wetted by benzene having a solid content of approximately 30 %.

Successively, 20 kg of the copolymer wetted by benzene was supplied to a dryer having a capacity of 50 L, being capable of reducing internal pressure, which has an inverted conically shaped structure vessel, the vessel having a screw body along with its sloped internal wall, the screw body revolving on its own shaft, the screw body revolving by planetary motion along the sloped internal wall.

The temperature of a heat transfer medium was maintained at a temperature of 100° C, the internal pressure of the vessel was reduced to from 50 to 60 Torr, planetary revolution velocity of the screw body was 37 r.p.m, and the drying period time was 8 hours.

After completion of drying, a colorless, granulated and non-dusting copolymer was obtained.

The standard sieves (having a frame diameter of 200 mm) having mesh size of from 177 microns to 4.6 mm were used to classify 50 g of the granulated copolymer for a period of 10 minutes.

And also, the particle size distribution range of the granulated copolymer was measured with a Lotap type sieve shaker.

The weight percents of the copolymer remaining over each sieve were measured for three groups (n1 to n3), each of 50 g, to represent the particle size distribution range.

The results are shown in Table 1 and in Figure 2 to 4.

Table 1

(corresponding to Figures 2 to 4, respectively)

| meshes of a net sieve (microns) | percent by weight based on the total weight | | |
|---|---|---|---|
| | n1 | n2 | n3 |
| larger than 4,760 | 5.7 | 0 | 0.2 |
| 1,000 to 4,760 | 72.1 | 85.8 | 87.7 |
| 840 to 1,000 | 5.7 | 5.0 | 4.2 |
| 590 to 840 | 7.7 | 5.5 | 4.2 |
| 350 to 590 | 6.1 | 3.0 | 2.8 |
| 177 to 350 | 2.4 | 0.7 | 0.8 |
| smaller than 177 | 0.4 | 0.2 | 0.2 |

The content of inorganic materials in the copolymers were trace.

The content of inorganic materials was measured based on the Japanese Industrial Standard K4101.

## EXAMPLE 2

The same procedures as described in Example 1 were repeated, except that the temperature of the heat transfer medium was maintained at a temperature of 120° C and internal pressure of the vessel was maintained at atmospheric pressure to remove solvent.

After completion of removal of the great parts of solvent, the internal pressure of the vessel was reduced to less than 100 Torr., nitrogen gas was supplied at a supplying velocity of 3 $m^3$/hour from the bottom of the dryer when the temperature of the copolymer is raised to 70° C. After completion of drying, the copolymer was moderately granulated, colorless and non-dusting.

The results are shown in Table 2 and in Figure 5 and Figure 6.

The weight percents of the copolymer remaining over each sieve were measured for two groups (n1 and n2), each of 50 g, to determing the particle size distribution range.

Table 2

(corresponding to Figure 5 and Figure 6, respectively)

| meshes of a net sieve (microns) | percent by weight based on the total weight | |
|---|---|---|
| | n1 | n2 |
| larger than 4,000 | 3.4 | 1 |
| 1,680 to 4,000 | 43.6 | 16 |
| 840 to 1,680 | 37.6 | 44 |
| 590 to 840 | 7.6 | 16 |
| 177 to 590 | 6.0 | 21 |
| smaller than 177 | 1.8 | 21 |

The content of inorganic materials in the copolymers were trace.

COMPARATIVE EXAMPLE 1

The same procedures as described in Example 2 were repeated, except that the classification process by sieving was carried out for a commercially supplied methyl vinyl ether/maleic anhydride copolymer product(AN-169 manufactured by General Anilin & Film Corporation) , which was in a powder-state and dusty.

The results are shown in Table 3 and in Figure 7 and Figure 8.

Table 3

(corresponding to Figure 7 and Figure 8, respectively)

| meshes of a net sieve (microns) | percent by weight based on the total weight | |
|---|---|---|
| | n1 | n2 |
| larger than 4,000 | 0 | 0 |
| 1,680 to 4,000 | 0 | 0 |
| 840 to 1,680 | 0 | 0.2 |
| 590 to 840 | 0 | 0.2 |
| 177 to 590 | 87 | 58.6 |
| smaller than 177 | 13 | 41.0 |

While the invention has been described in detail and with reference to specific embodiments thereof, it will be apparent to one skilled in the art that various changes and modifications can be made therein without departing from the spirit and scope thereof.

## Claims

1. A granulated methyl vinyl ether/maleic anhydride copolymer containing maximum particle size granules of larger than 600 microns, said granules having a particle size distribution of more than 20 % by weight based on the total weight, and not substantially containing any inorganic materials.

2. A granulated methyl vinyl ether/maleic anhydride copolymer as set forth in claim 1, wherein the content of said maximum particle size granules of larger than 600 microns is more than 60 % by weight based on the total weight.

3. A process for the preparation of a granulated methyl vinyl ether/maleic anhydride copolymer containing maximum particle size granules of larger than 600 microns, said granules having a particle size distribution of more than 20 % by weight based on the total weight, and not substantially containing any inorganic materials, which comprises the step of:
   (a) introducing a solvent-containing slurry state methyl vinyl ether/maleic anhydride copolymer from the upper parts of a vessel which has an inverted conically shaped-structure, said vessel having a screw body adjacent to its sloped internal wall, said screw body revolving on its own shaft, said screw body revolving by planetary motion along the sloped internal wall;
   (b) heating said slurry state methyl vinyl ether/maleic anhydride copolymer; and
   (c) discharging a solvent-free methyl vinyl ether/maleic anhydride copolymer from the lower part of said vessel.

4. A process as set forth in claim 3, wherein the ratio of the length of the screw body to the height of the sloped internal wall of the vessel is from 1/2 to 1/1.

5. A process as set forth in claim 3, wherein the ratio of the length of the screw body to the height of the sloped internal wall of the vessel is from 3/4 to 4/5.

6. A process as set forth in claim 3, wherein the sloped internal wall has an angle of from 15 to 75 degrees.

7. A process as set forth in claim 3, wherein the sloped internal wall has an angle of from 30 to 45 degrees.

8. A process as set forth in claim 3, wherein the concentration range of the copolymer is from 5 to 30% by weight.

9. A process as set forth in claim 3, wherein the concentration range of the copolymer is from 10 to 30% by weight.

Figure 1

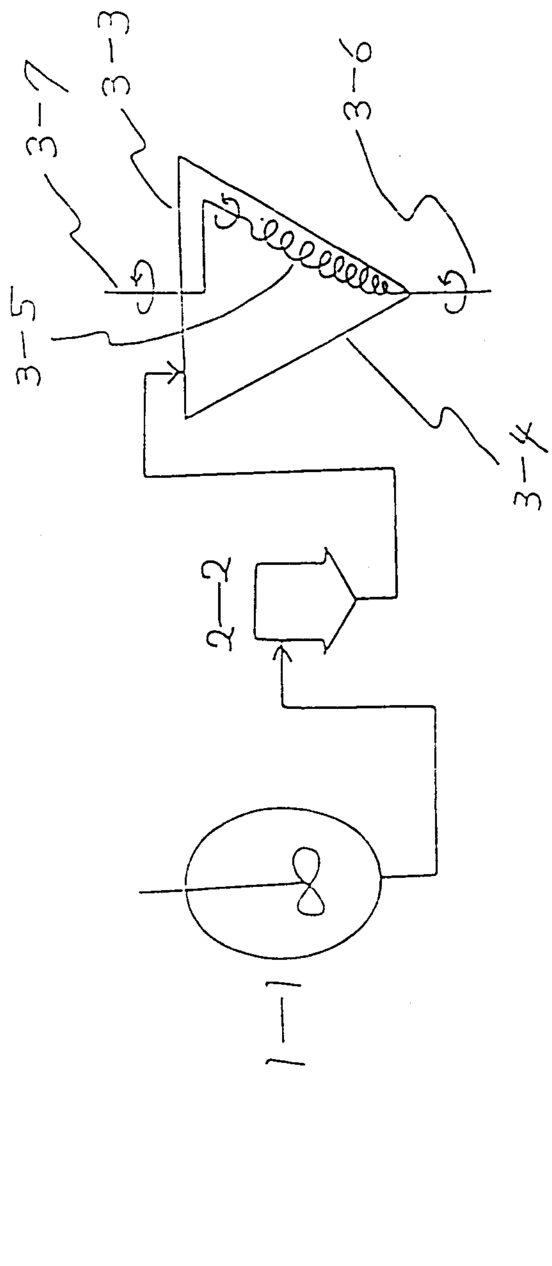

Figure 2

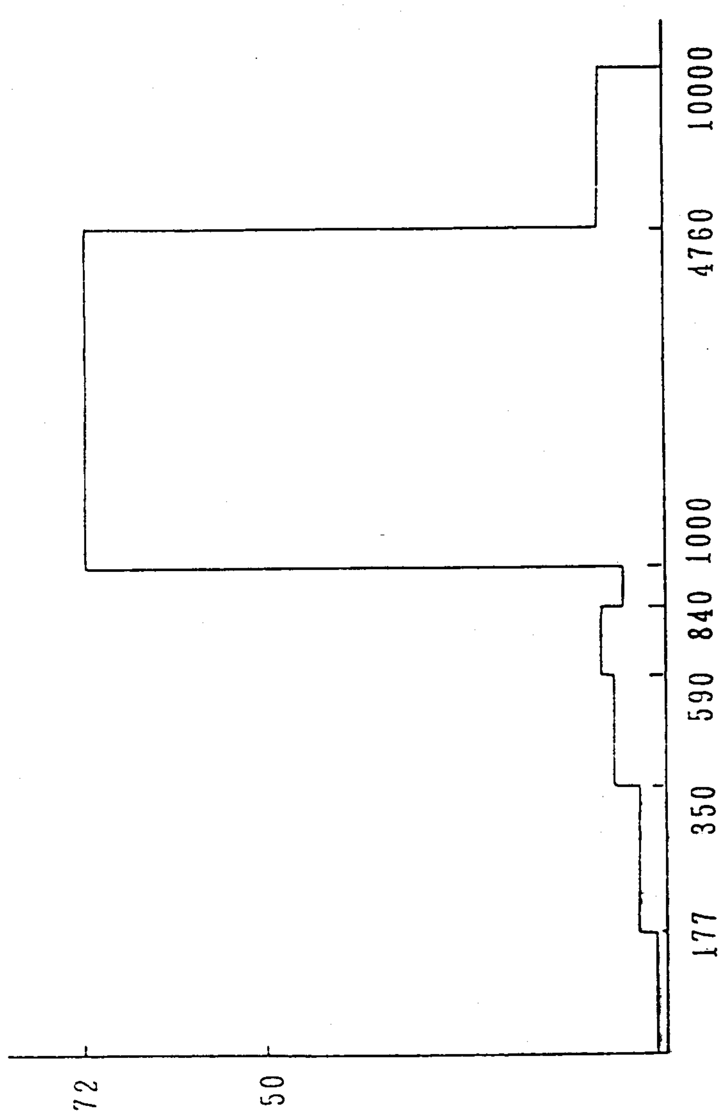

Figure 3

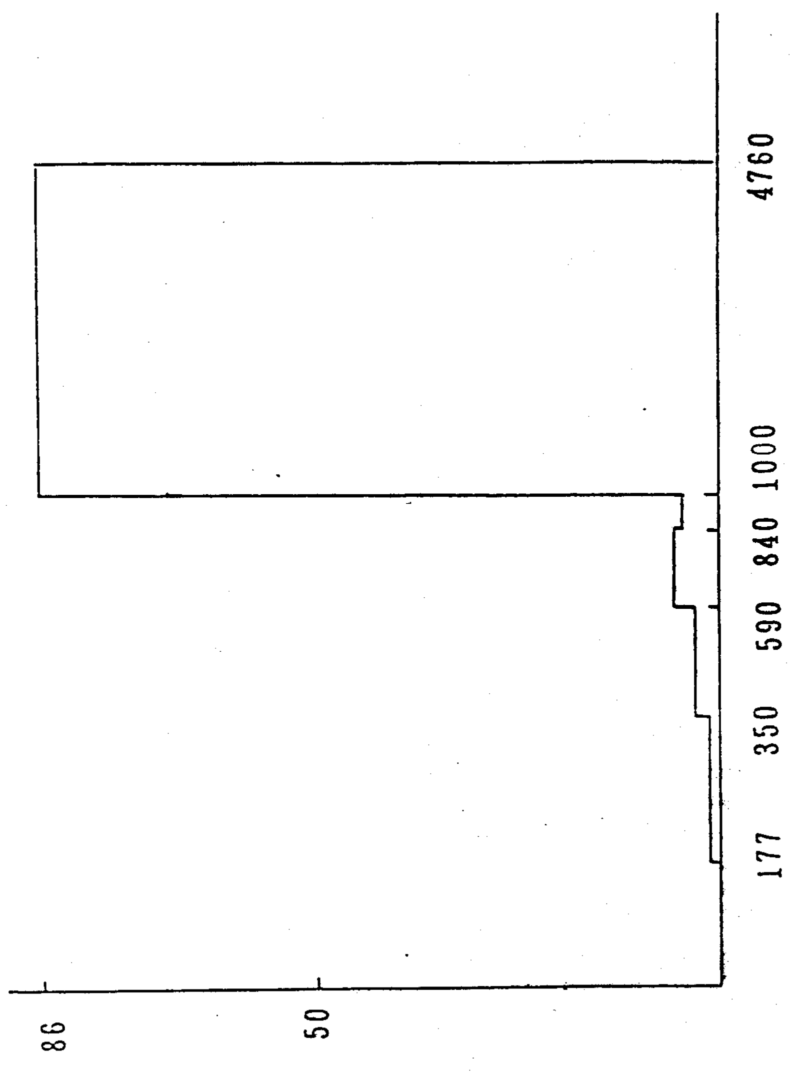

Figure 4

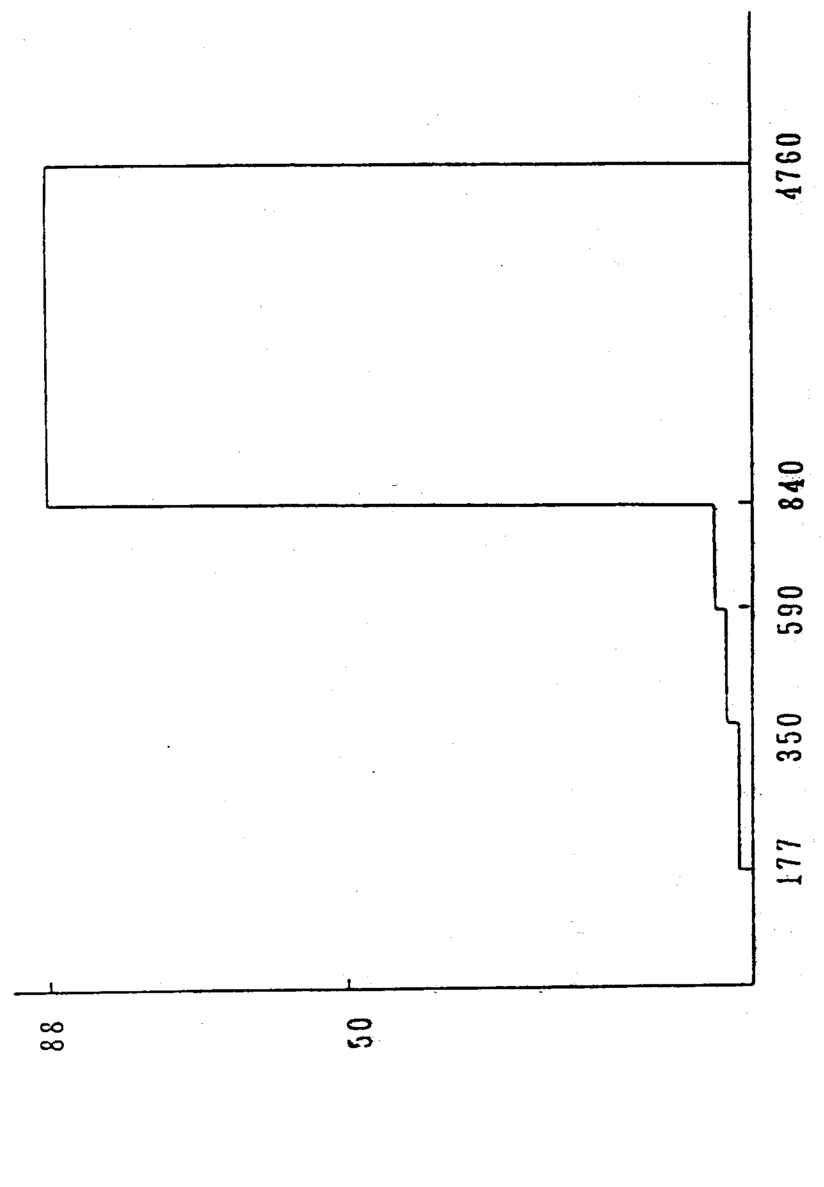

Figure 5

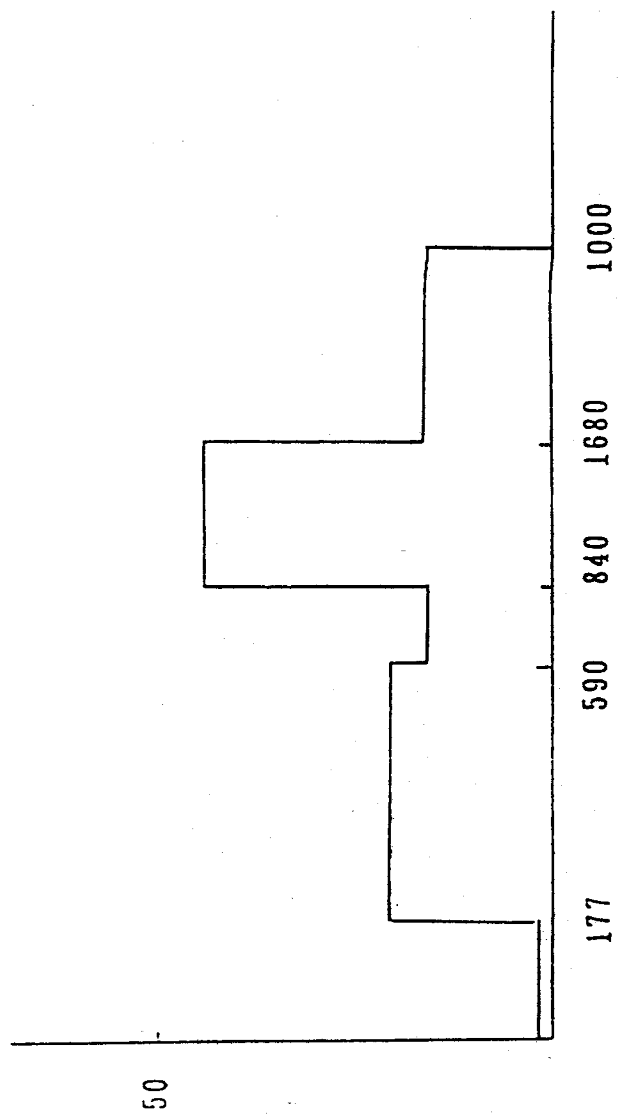

Figure 6

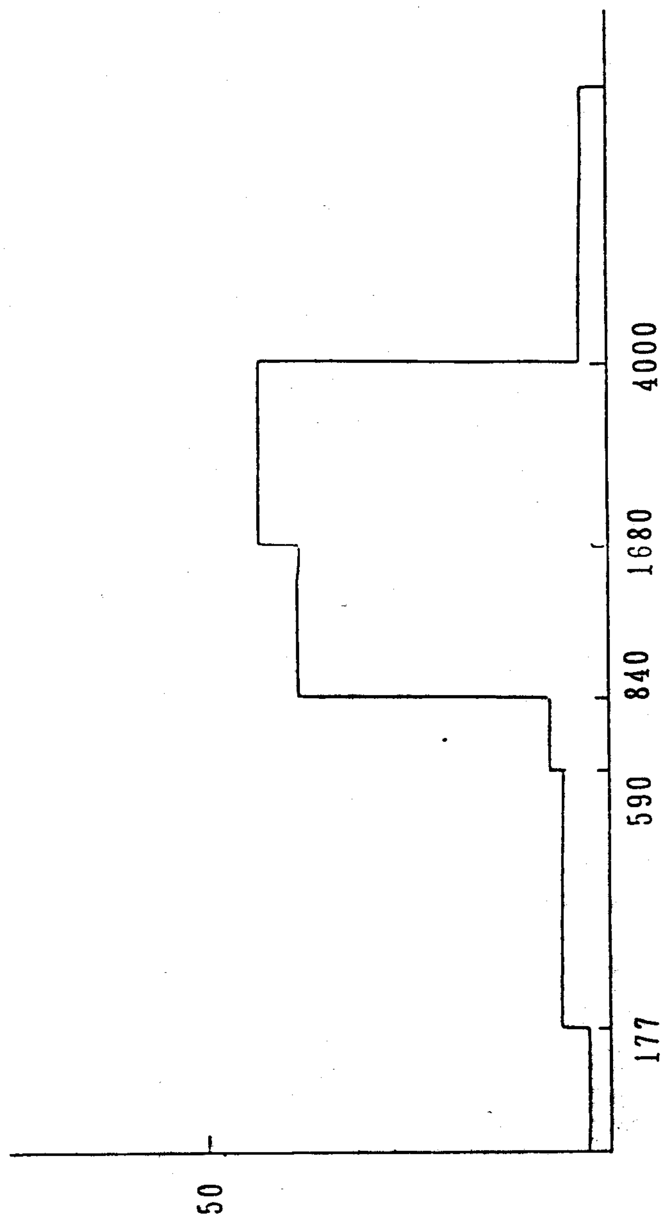

Figure 7

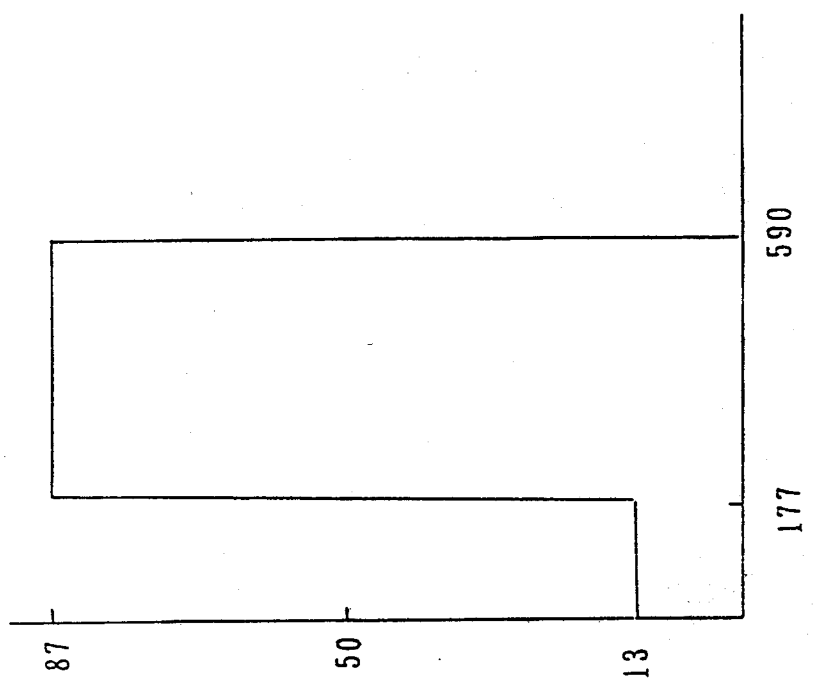

Figure 8

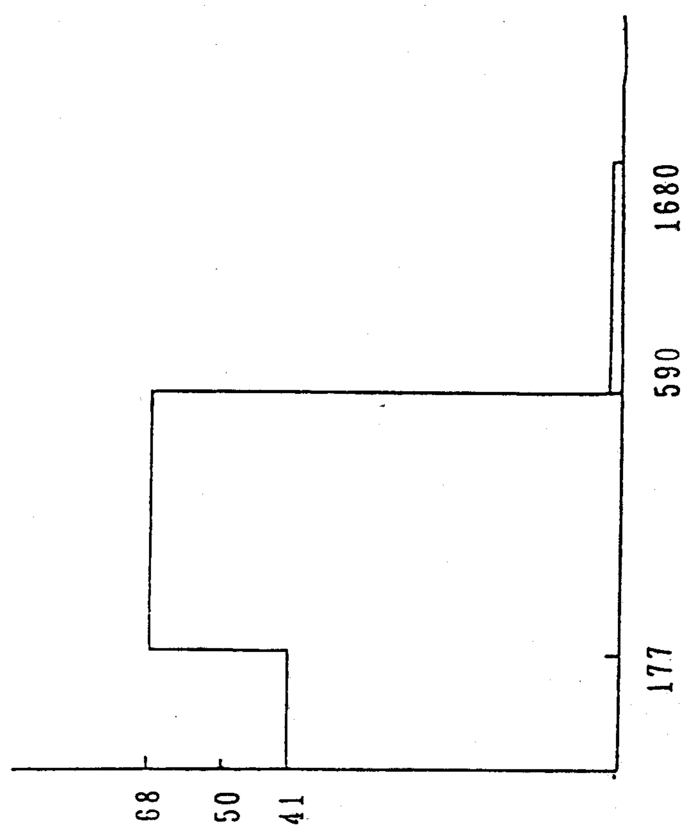

European Patent Office

# EUROPEAN SEARCH REPORT

Application Number

EP 91105243.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | <u>US - A - 4 370 454</u> (MESSMER et al.) * Claim 1; example 4 * -- | 1-3 | C 08 F 216/18<br>C 08 J 3/16<br>//(C 08 F 216/18<br>C 08 F 222:06) |
| A | <u>US - A - 4 952 558</u> (GOERTZ et al.) * Claim 1; column 4, lines 61-62 * ---- | 1 | |

| TECHNICAL FIELDS SEARCHED (Int. Cl.5) |
|---|
| C 08 F 16/00<br>C 08 F 22/00<br>C 08 F 216/00<br>C 08 F 222/00<br>C 08 J 3/00 |

The present search report has been drawn up for all claims

| Place of search | Date of completion of the search | Examiner |
|---|---|---|
| VIENNA | 20-12-1991 | PUSTERER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)